# EUROPEAN PATENT APPLICATION

(11) **EP 1 845 517 A2**
(43) Date of publication of application: **17.10.2007**
(21) Application number: 07251564.6
(22) Date of filing: 11.04.2007
(51) Int. Cl.: G10H 1/40

(54) **Retrieving and selecting content and content playback and search**

(30) Priority: 12.04.2006 JP 2006109571
(71) Applicant: Sony Corporation, Minato-ku Tokyo (JP)
(72) Inventor: Takai, Motoyuki, Tokyo (JP); Sako, Yoichiro, Tokyo (JP); Terauchi, Toshiro, Tokyo (JP); Komori, Akihiro, Tokyo (JP); Sano, Akane, Tokyo (JP); Inoue, Makoto, Tokyo (JP); Shirai, Katsuya, Tokyo (JP); Tamori, Hirofumi, Tokyo (JP); Makino, Kenichi, Tokyo (JP); Nakamura, Takatoshi, Tokyo (JP); Takatsuka, Susumu, Tokyo (JP); Sasaki, Toru, Tokyo (JP); Sakai, Yuichi, Tokyo (JP)
(74) Representative: DeVile, Jonathan Mark

(57) **Abstract**

A method of retrieving and selecting content includes the steps of detecting a motion tempo of a user; determining whether a time during which the detected motion tempo is continuously outside a threshold range of the motion tempo corresponding to content being played back exceeds a waiting time that is set or calculated; and retrieving and selecting content suitable for the motion tempo of the user if the motion tempo of the user is outside the threshold range for a time period longer than the waiting time.

## Description

The present invention relates to retrieving and selecting content and content playback and search. Embodiments of the present invention relate to a method of retrieving and selecting content, such as a music piece or an image, to a content playback apparatus, such as a music playback apparatus, and to a search server to which user terminals are connected over a communication network, such as the Internet or a mobile telephone network.

Users often enjoy listening to music while they are walking or jogging or they are doing exercise on treadmills. Accordingly, methods of matching the playback tempo (playback speed) of music pieces with the walking tempo of users are proposed.

For example, Japanese Unexamined Patent Application Publication No. 2001-299980 discloses a device capable of varying the music tempo in accordance with the exercise tempo of a user. Japanese Unexamined Patent Application Publication No. 2005-156641 discloses a device and a method capable of matching the playback speed of a music piece with the walking tempo of a user.

Furthermore, Japanese Unexamined Patent Application Publication No. 2004-113552 discloses a device that displays a list of music pieces having tempos closely matched with the walking pitch (walking tempo) of a user in a display unit and plays back a music piece selected by the user from the displayed list of music pieces such that the playback tempo of the selected music piece matches with the walking pitch (walking tempo) of the user.

However, when the playback tempo of a music piece is to be varied with the walking tempo of the user, as in the devices disclosed in Japanese Unexamined Patent Application Publication Nos. 2001-299980 and 2005-156641, the playback tempo of the music piece extremely increases or decreases if the walking tempo of the user is greatly varied and, thus, the music piece can be offensive to the ears of the user.

When the list of music pieces having tempos closely matched with the walking tempo of the user is displayed in the display unit and the user selects a music piece from the displayed list, as in the device disclosed in Japanese Unexamined Patent Application Publication No. 2004-113552, it is necessary for the user to watch the screen of the display unit while he/she is walking in order to select the music piece. As a result, the user can find the operation troublesome and the operation can prevent smooth walking.

Accordingly, music playback apparatuses can be configured such that the controller in each of the music playback apparatuses selects and plays back another music piece having a music tempo matched with the walking tempo if the walking tempo of the user is outside the threshold range corresponding to a music piece being played back. With such a configuration of the music playback apparatus, a music piece suitable for the motion of the user can be selected and played back with a natural interface even if the user does not issue a special instruction.

However, in this case, if another music piece is selected and played back immediately after the motion tempo of the user is varied, the music pieces to be selected and played back are rapidly switched, for example, when the user alternately repeats walking and stopping in a short time. In contrast, if another music piece is selected and played back a predetermined time after the motion tempo of the user is varied, an up-tempo music piece intended by the user is played back only after the predetermined time elapsed, for example, when the user suddenly increases the walking tempo.

It is desirable that content suitable for the motion of a user be selected and played back even if the user does not issue a special instruction and that the content be switched so as to follow the preference or variations in the motion pattern of the user when the motion tempo of the user is varied.

Various respective aspects and features of the invention are defined in the appended claims. Features from the dependent claims may be combined with features of the independent claims as appropriate and not merely as explicitly set out in the claims.

According to an embodiment of the present invention, a method of retrieving and selecting content includes the steps of detecting a motion tempo of a user; determining whether a time during which the detected motion tempo is continuously outside a threshold range of the motion tempo corresponding to content being played back exceeds a waiting time that is set or calculated; and retrieving and selecting content suitable for the motion tempo of the user if the motion tempo of the user is outside the threshold range for a time period longer than the waiting time.

According to another embodiment of the present invention, a content playback apparatus includes a storage device in which content data is recorded; detecting means for detecting a motion tempo of a user and outputting the detected motion tempo value; retrieving and selecting means for retrieving and selecting content suitable for the detected motion tempo value output from the detecting means; and playback means for playing back the content data recorded in the storage device or content data transmitted from a delivery server connected to the content playback apparatus over a communication network as the content retrieved and selected by the retrieving and selecting means. The retrieving and selecting means determines whether a time during which the detected motion tempo value is continuously outside a threshold range of the motion tempo corresponding to content being played back exceeds a waiting time that is set or calculated and, if the detected motion tempo value is outside the threshold range for a time period longer than the waiting time, retrieves and selects content suitable for the detected motion tempo value.

According to another embodiment of the present invention, a search server to which a user terminal is connected over a communication network includes a database storing content data or content additional information concerning multiple pieces of content; and retrieving and selecting means for retrieving and selecting content suitable for a detected motion tempo value of a user from the multiple pieces of content stored in the database as the content data or the content additional information. The retrieving and selecting means determines whether a time during which the detected motion tempo value is continuously outside a threshold range of the motion tempo corresponding to the selected content exceeds a waiting time that is set or calculated and, if the detected motion tempo value is outside the threshold range for a time period longer than the waiting time, retrieves and selects content suitable for the detected motion tempo value.

According to another embodiment of the present invention, there is provided a recording medium in which a program for retrieving and selecting content is recorded. The program causes a computer to function as means for determining whether a time during which a detected motion tempo value of a user is continuously outside a threshold range of the motion tempo corresponding to the selected content exceeds a waiting time that is set or calculated and, if the detected motion tempo value is outside the threshold range for a time period longer than the waiting time, retrieving and selecting content suitable for the detected motion tempo value, in order to retrieve and select a piece of content from multiple pieces of content.

In the method of retrieving and selecting content described above, the waiting time is set by the user, or a waiting time used when the motion tempo is increased and is outside the threshold range and a waiting time used when the motion tempo is decreased and is outside the threshold range are separately set or calculated. Accordingly, the content is switched so as to follow the preference or variations in the motion pattern of the user when the motion tempo of the user is varied.

According to embodiments of the present invention, it is possible to select and play back content suitable for the motion of a user even if the user does not issue a special instruction and to switch the content so as to follow the preference or variations in the motion pattern of the user when the motion tempo of the user is varied.

The invention will now be described by way of example with reference to the accompanying drawings, throughout which like parts are referred to by like references, and in which:
Fig. 1 is a block diagram showing an example of the connection configuration of a content playback apparatus according to a first embodiment of the present invention;
Fig. 2 shows an example of the functional configuration of the content playback apparatus shown in Fig. 1 according to the first embodiment of the present invention;
Fig. 3 illustrates an exemplary state in which a user is walking;
Fig. 4A shows an example of a signal output from a sensor;
Fig. 4B shows an example of an autocorrelation waveform;
Fig. 5 shows examples of music piece lists, music piece additional information, and waiting times;
Fig. 6 is a graph showing an example of relationship between a variation in a motion tempo and retrieval and selection of music pieces;
Fig. 7 is a graph showing another example of the relationship between a variation in the motion tempo and retrieval and selection of music pieces;
Fig. 8 is a graph showing another example of the relationship between a variation in the motion tempo and retrieval and selection of music pieces;
Fig. 9 is a graph showing another example of the relationship between a variation in the motion tempo and retrieval and selection of music pieces;
Fig. 10 is a flowchart showing part of an example of a retrieval and selection process when the waiting time is not updated;
Fig. 11 is a flowchart showing part of the example of the retrieval and selection process when the waiting time is not updated;
Fig. 12 is a flowchart showing part of an example of a retrieval and selection process when the waiting time is updated;
Fig. 13 is a flowchart showing part of the example of the retrieval and selection process when the waiting time is updated;
Fig. 14 is a flowchart showing part of the example of the retrieval and selection process when the waiting time is updated; and
Fig. 15 is a block diagram showing an example the structure of a search system serving as a network system, according to a second embodiment of the present invention.

### First Embodiment

A content playback apparatus and a method of retrieving and selecting content according to a first embodiment of the present invention will now be described. It is assumed that content is a music piece and that a user uses the content playback apparatus to retrieve and select a music piece.

### Configuration of Content Playback Apparatus

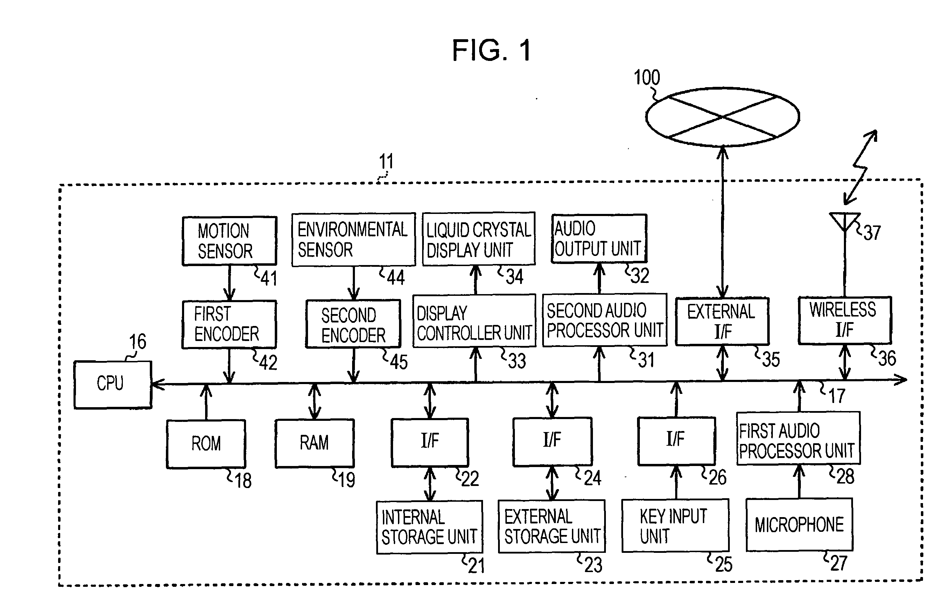

Fig. 1 is a block diagram showing an example of the connection configuration of a content playback apparatus 11 according to the first embodiment of the present invention.

In the example shown in Fig. 1, the content playback apparatus 11 is, for example, a portable or desktop music playback apparatus or a mobile telephone terminal. The content playback apparatus 11 includes a central processing unit (CPU) 16, a read only memory (ROM) 18, and a random access memory (RAM) 19, which are connected to each other via a bus 17. Various programs and a variety of data, including a program for retrieving and selecting content according to the embodiment of the present invention, are written in the ROM 18. The programs and data are expanded in the RAM 19.

An internal storage unit 21 is connected to the bus 17 via an interface (I/F) 22 and an external storage unit 23 is connected to the bus 17 via an I/F 24. The internal storage unit 21 is, for example, a hard disk or a semiconductor memory incorporated in the content playback apparatus 11. The external storage unit 23 is a removable storage device, such as a compact disc (CD) or a memory card. Music piece data concerning many music pieces, music piece additional information, and multiple music piece lists (playlists) are recorded in the internal storage unit 21 or the external storage unit 23.

In addition, a key input unit 25 is connected to the bus 17 via an I/F 26 and a microphone 27 is connected to the bus 17 via a first audio processor unit 28. An audio output unit 32 is connected to the bus 17 via a second audio processor unit 31 and a liquid crystal display unit 34 is connected to the bus 17 via a display controller unit 33.

The first audio processor unit 28 converts an analog audio signal supplied from the microphone 27 into digital audio data and compresses the digital audio data, if needed. The second audio processor unit 31 decompresses digital audio data transmitted via the bus 17, if the digital audio data is compressed, and converts the digital audio data into an analog audio signal. The audio output unit 32 is, for example, a speaker or a headphone.

Furthermore, an external I/F 35 through which the content playback apparatus 11 is connected to the Internet 100 is connected to the bus 17. An antenna 37 is connected to the bus 17 via a wireless I/F 36. However, when the content playback apparatus 11 is used to retrieve and select a music piece as in the first embodiment of the present invention, the external I/F 35, the wireless I/F 36, and the antenna 37 may be omitted in the content playback apparatus 11.

Furthermore, a motion sensor 41 is connected to the bus 17 via a first encoder 42 and an environmental sensor 44 is connected to the bus 17 via a second encoder 45.

The motion sensor 41 detects a motion of the user as motion information. The motion sensor 41 may be a device capable of detecting a biological state, such as the heart beat or myogenic potential, of the user as long as a motion tempo of the user can be eventually detected from the motion information output from the device. However, it is desirable that the motion sensor 41 be a device capable of directly detecting a physical motion of the user, such as a step, a motion of a hand, a motion of the head, a swing of the arm, or a vertical or horizontal motion of the body. Specifically, as described below, an acceleration sensor or a video camera is used as the motion sensor 41.

When the user does exercise using a fitness machine, for example, when the user runs on a treadmill, the movement of the machine may be detected as the motion of the user.

The first encoder 42 converts the motion information output from the motion sensor 41 into a digital signal, if the motion information is an analog signal, and processes and analyzes the digital signal to detect the motion tempo of the user as key information.

The environmental sensor 44 detects, for example, the date, the temperature, or the current position as environmental information. The second encoder 45 converts the environmental information output from the environmental sensor 44 into a digital signal, if the environmental information is an analog signal, and processes and analyzes the digital signal to produce and detect a certain pattern of the current environment, including the season, the day or night, the cold or warm, the interior or exterior, or the locality, such as the seafront or the base of a mountain.

Although the environmental sensor 44 and the second encoder 45 may be omitted in the content playback apparatus 11, the provision of the environmental sensor 44 and the second encoder 45 allows a difference in the environment to be additionally used for the retrieval and selection of a music piece.

If the detected motion tempo is registered and the detected motion tempo value that has been registered is invoked to retrieve and select a music piece, as described below, provision of an environment detecting unit including the environmental sensor 44 and the second encoder 45 allows a series of detected motion tempo values corresponding to the current environment to be invoked without an instruction of the user.

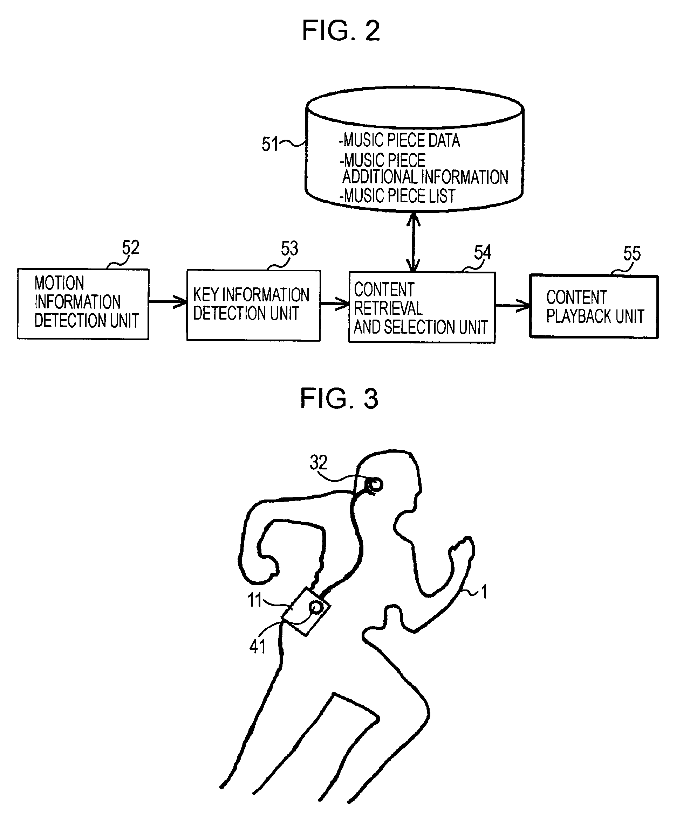

Fig. 2 shows an example of the functional configuration of the content playback apparatus 11 shown in Fig. 1 according to the first embodiment of the present invention, in the retrieval and selection of a music piece. The content playback apparatus 11 in Fig. 1 functionally includes a content database 51, a motion information detection unit 52, a key information detection unit 53, a content retrieval and selection unit 54, and a content playback unit 55.

The content database 51 corresponds to the internal storage unit 21 or the external storage unit 23 in the example shown in Fig. 1. Music piece data concerning many music pieces, music piece additional information, and multiple music piece lists are stored in the content database 51.

The motion information detection unit 52 corresponds to the motion sensor 41 and the CPU 16 in the example shown in Fig. 1. The motion information detection unit 52 detects a motion of the user as the motion information.

The key information detection unit 53 corresponds to the first encoder 42 and the CPU 16 in the example shown in Fig. 1. The key information detection unit 53 processes and analyzes the motion information detected by the motion information detection unit 52 to detect the motion tempo of the user as the key information.

The content retrieval and selection unit 54 corresponds to the CPU 16, the ROM 18, and the RAM 19 in the example shown in Fig. 1. The content retrieval and selection unit 54 directly retrieves and selects a music piece suitable for the motion tempo of the user from the multiple music pieces recorded in the content database 51 by a method described below on the basis of the detected motion tempo values detected by the key information detection unit 53. Alternatively, the content retrieval and selection unit 54 retrieves a music piece list suitable for the motion tempo of the user from the multiple music piece lists recorded in the content database 51 by a method described below on the basis of the detected motion tempo values detected by the key information detection unit 53 and selects a music piece from the retrieved music piece list.

The content playback unit 55 corresponds to the second audio processor unit 31, the audio output unit 32, and the CPU 16 in the example shown in Fig. 1. The content playback unit 55 plays back the retrieved and selected music piece on the basis of the music piece data, recorded in the content database 51, concerning the music piece retrieved and selected by the content retrieval and selection unit 54.

As described below, the retrieved and selected music piece may not necessarily be played back in real time. When the retrieved and selected music piece is not played back in real time, the artist name or the music piece name of the retrieved and selected music piece is displayed in the liquid crystal display unit 34 in Fig. 1, on the basis of the music piece additional information, recorded in the content database 51, concerning the music piece retrieved and selected by the content retrieval and selection unit 54.

### Detection of Motion Tempo

When a user 1 uses the content playback apparatus 11 to retrieve and select a music piece while the user is walking outside, the user 1 carries the content playback apparatus 11 in which the motion sensor 41 is incorporated or mounted or to which the motion sensor 41 is connected, as shown in Fig. 3. For example, the user 1 wears the content playback apparatus 11 at his/her waist or wraps the content playback apparatus 11 around his/her arm. In order for the user 1 to listen to the retrieved and selected music piece, the user 1 wears the headphone as the audio output unit 32 on his/her head to play back the music piece.

An acceleration sensor, a strain sensor, or a pressure sensor is used as the motion sensor 41 in the above case. The motion sensor 41 detects a walking state of the user 1 from, for example, the vertical motion of the body, the step, or swing of the arm during walking.

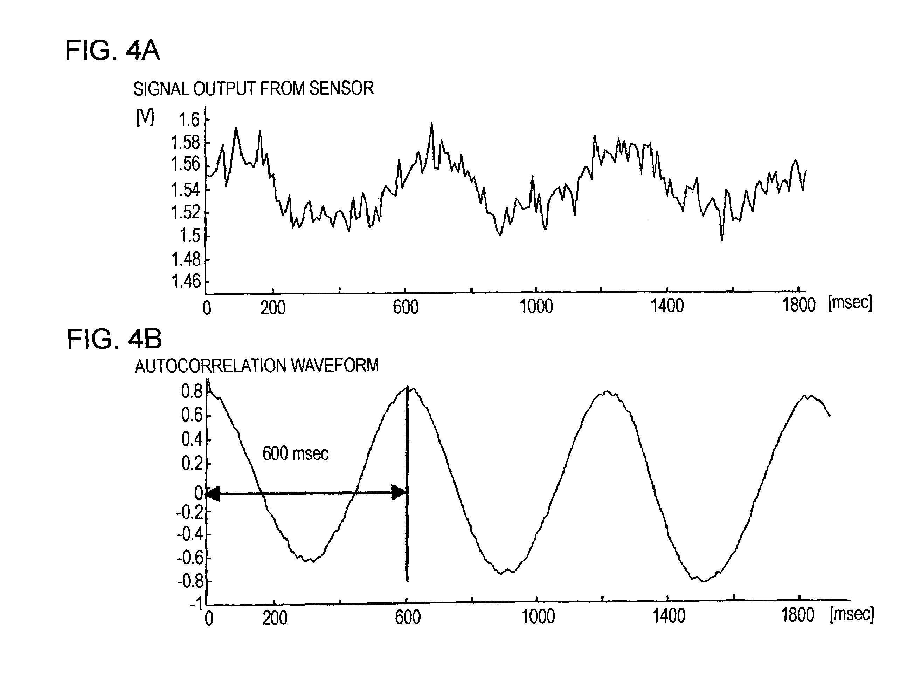

Accordingly, while the user 1 is walking, a signal in which a voltage V inches in a short time range but periodically varies as a whole is yielded as the motion information output from the motion sensor 41, as shown in Fig. 4A as a signal output from the motion sensor 41.

In the example shown in Fig. 4A, the time during which the user 1 steps the left foot (the heel of the left foot is contact with the ground) and subsequently steps the right foot (the heel of the right foot is contact with the ground) corresponds to one period and the time during which the user 1 steps the right foot and subsequently steps the left foot also corresponds to one period.

The walking period indicates a walking tempo. The walking tempo becomes fast if the walking period is short while the walking tempo becomes slow if the walking period is long. The walking includes running here.

The key information detection unit 53 in Fig. 2 detects the walking tempo as the key information. In order to detect the walking tempo, the key information detection unit 53 can use a method of yielding an autocorrelation waveform of the signal output from the motion sensor 41, shown in Fig. 4A. When the signal shown in Fig. 4A is output from the motion sensor 41, an autocorrelation waveform shown in Fig. 4B is yielded. The walking period or walking tempo (motion tempo) can be detected from the autocorrelation waveform.

For example, when the walking period is 600 ms, that is, when it takes 600 ms for the user to take one step, the user takes 100 steps per minute. The walking tempo (motion tempo) is hereinafter indicated in steps per minute (spm). One hundred spm can be converted into 100 beats per minute at quarter note in the music tempo. The music tempo is hereinafter indicated in beats per minute (bpm). In the autocorrelation waveform shown in Fig. 4B, the walking tempo is equal to 100 spm (100 steps per minute). In this case, information indicating that the motion tempo is equal to 100 spm is yielded as the key information.

When the user does exercise indoors, a video camera can be used as the motion sensor 41 (the motion information detection unit 52). In such a case, the first encoder 42 (the key information detection unit 53) can process and analyze video data obtained by the video camera by, for example, an image or pattern recognition method to detect the motion tempo of the user as the key information.

As described above, when the user does exercise using a fitness machine, for example, is running on a treadmill, the motion sensor 41 (the motion information detection unit 52) is mounted to the machine to detect the movement of the machine as the motion of the user. The first encoder 42 (the key information detection unit 53) detects the motion tempo of the user as the key information.

The content retrieval and selection unit 54 acquires a detected motion tempo value from the key information detection unit 53 by using a predetermined time τ as the acquirement period.

It is assumed that the time τ is equal to, for example, two seconds. If the walking period is close to 600 ms (the walking tempo is close to 100 spm), as in the example shown in Fig. 4B, the acquirement period is three or more times longer than the walking period and, therefore, multiple walking periods (multiple walking tempos) can be detected within the acquirement period. The average of the multiple walking tempo values that are detected or the walking tempo value that is finally detected is output from the key information detection unit 53 as the detected motion tempo value.

### Music Piece List and Music Piece Additional Information

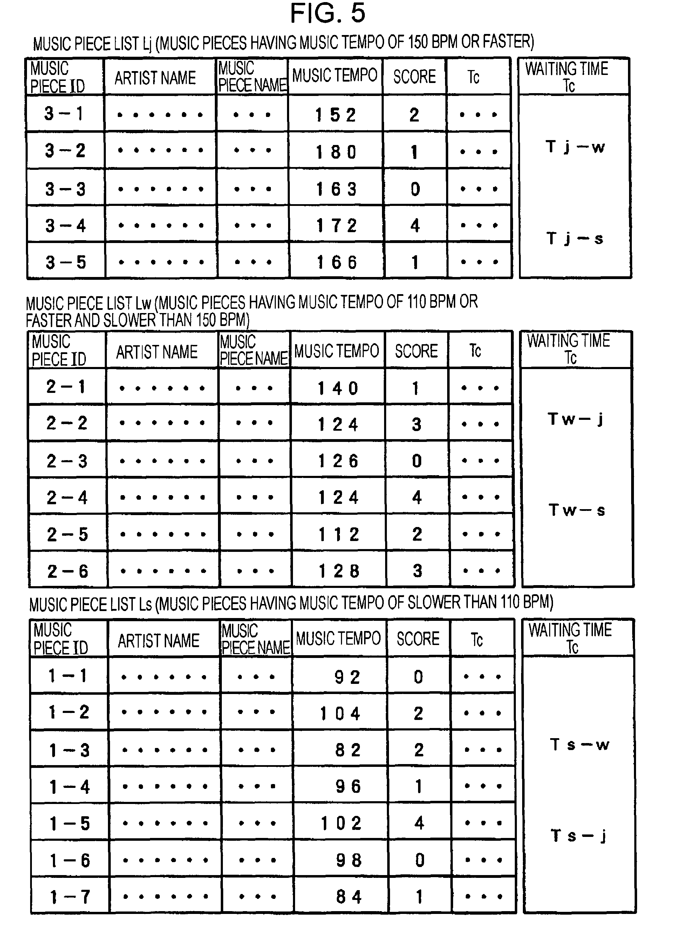

When a music piece list is retrieved from the music piece lists and a music piece is selected from the retrieved music piece list, for example, three music piece lists Ls, Lw, and Lj are prepared, as shown in Fig. 5.

The music piece list Ls lists music pieces having slow tempos, each having a music tempo of slower than 110 bpm. The music piece list Lw lists music pieces each having a music tempo of 110 bpm or faster and slower than 150 bpm, which are suitably played back during walking. The music piece list Lj lists music pieces each having a music tempo of 150 bpm or faster, which are suitably played back during jogging.

The motion tempo slower than 110 spm is hereinafter called a slow tempo, the motion tempo 110 spm or faster and slower than 150 spm is hereinafter called a walking tempo, and the motion tempo 150 spm or faster is hereinafter called a jogging tempo.

Music piece IDs (identification numbers) uniquely identifying the music pieces, artist names of the music pieces, music piece names, music tempos, and scores are described for the music pieces listed in the music piece lists Ls, Lw, and Lj. The artist names, the music piece names, the music tempos, and the scores are used as the music piece additional information.

The music tempos indicate the tempos of the music pieces. If the music pieces are directly retrieved and selected, the music piece tempos are used to retrieve and select a music piece.

The scores indicate how much the user prefers the music pieces (the larger the values, the higher the preference levels), how many times the music pieces were played back in the past (the larger the values, the smaller or larger the number of playbacks in the past), or how long it's been since the music pieces were played back last time (the larger the values, the longer the elapsed times). The scores are additionally used in the selection of the music pieces. The scores may be set by the user.

### Waiting Time

According to embodiments of the present invention, a waiting time is set or calculated.

How closely the switching of the music pieces follow a variation in the motion tempo of the user (hereinafter referred to as "followingness") depends on the waiting time, as described below. As the waiting time is decreased, the probability of the switching of the music piece to be selected and played back is increased when the motion tempo is varied and, if the music piece is to be switched to another one, the music piece is switched after a shorter time and the followingness is increased.

In contrast, as the waiting time is increased, the probability of the switching of the music piece to be selected and played back is decreased when the motion tempo is varied and, if the music piece is to be switched to another one, the music piece is switched after a longer time and the followingness is decreased.

The followingness of the switching of the music pieces is not directly and exclusively defined. For example, it cannot be said that the followingness should be higher or lower. Accordingly, the waiting time is set in the following manner.

For example, when the music piece lists Ls, Lw, and Lj shown in Fig. 5 are prepared, a waiting time Tc is set for every music piece list.
(1a) For the music piece list Ls, a waiting time Ts-w and a waiting time Ts-j are set. The waiting time Ts-w is set when the motion tempo is switched from the slow tempo to the walking tempo. The waiting time Ts-j is set when the motion tempo is switched from the slow tempo to the jogging tempo.
(1b) For the music piece list Lw, a waiting time Tw-s and a waiting time Tw-j are set. The waiting time Tw-s is set when the motion tempo is switched from the walking tempo to the slow tempo. The waiting time Tw-j is set when the motion tempo is switched from the walking tempo to the jogging tempo.
(1c) For the music piece list Lj, a waiting time Tj-w and a waiting time Tj-s are set. The waiting time Tj-w is set when the motion tempo is switched from the jogging tempo to the walking tempo. The waiting time Tj-s is set when the motion tempo is switched from the jogging tempo to the slow tempo.

Since the music pieces are desirably switched with a higher followingness if the motion tempo is increased, it is desirable that the waiting times Ts-w, Ts-j, and Tw-j when the motion tempo is increased be short. For example, it is desirable that the waiting times Ts-w, Ts-j, and Tw-j have a value of one to few seconds and that a relationship Ts-j < Ts-w and Tw-j be established. In other words, it is desirable that the waiting time be shorter as the motion tempo is largely increased.

In contrast, the music pieces are desirably switched with a lower followingness, in consideration of a case in which the user alternately repeats the walking and the stopping in a short time, as described below, if the motion tempo is decreased. Accordingly, it is desirable that the waiting time when the motion tempo is decreased, in particular, the waiting time Tw-s when the motion tempo is switched from the walking tempo to the slow tempo and the waiting time Tj-s when the motion tempo is switched from the jogging tempo to the slow tempo should be long to some extent. For example, the waiting times Tw-s and Tj-s are set to about 15 to 30 seconds.

If no music piece list exists, the waiting time Tc is set to each music piece. However, even if any music piece list exists, the waiting time Tc may be set to each music piece, as in the music piece lists shown in Fig. 5.

Also in this case, the two waiting times Tc are set to one music piece. For example, music pieces 2-1 and 2-2 in Fig. 5 differ in the music tempo but the music tempos of the music pieces 2-1 and 2-2 are within the range of the walking tempo. The same waiting time Tc may be set to such music pieces or different waiting times Tc may be set to such music pieces.

In addition, the waiting times Tc may be set in consideration of the pitches or the senses of beats of the music pieces, other than the music tempos.

Although the waiting times Tc may be set by a content provider in advance, it is desirable that the user set the waiting time Tc so as to achieve the followingness suitable for the preference or living activity of the user.

In this case, for example, the user can set a longer waiting time Tc to the music pieces whose music tempos the user do not want to be switched frequently to reduce the followingness of the switching of the music pieces.

If multiple users use the same content playback apparatus 11, the waiting time Tc is desirably set for every user. In this case, while the content playback apparatus 11 is activated, each user can input an instruction to identify the user into the content playback apparatus 11 and can cause the content playback apparatus 11 to set or read the waiting time Tc of the user to achieve the followingness suitable for the preference or the living activity of the user.

### Method of Retrieving and Selecting Content

### First Example

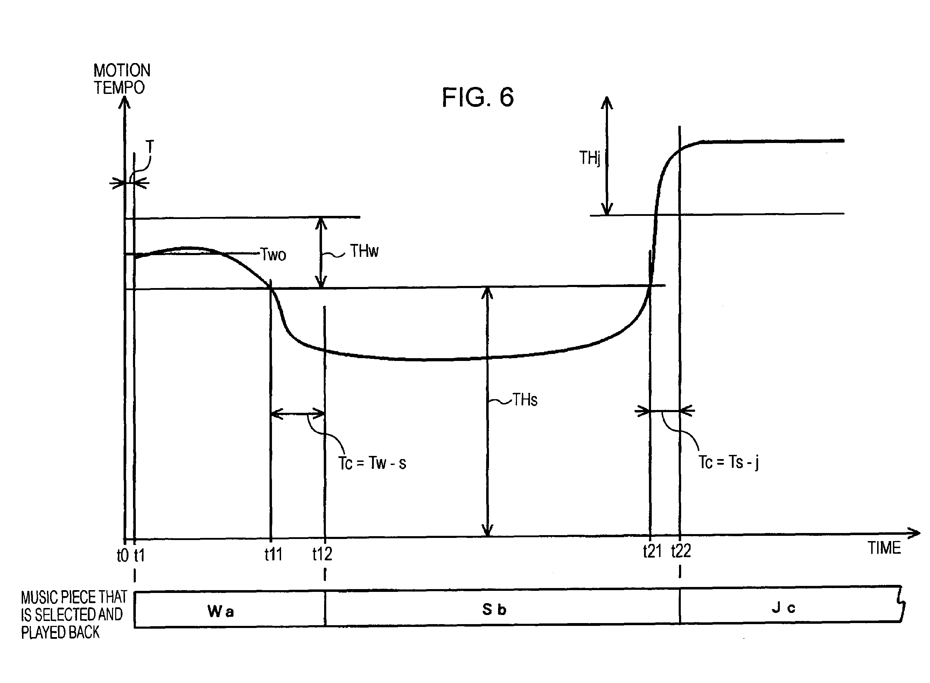

Fig. 6 shows a first example of a variation in the motion tempo of the user when a music piece is directly retrieved and selected.

In the first example, at a time t0, the user instructs the content playback apparatus 11 to select and play back a music piece and starts walking at the walking tempo. At a time t1 after the time τ elapsed since the time t0, the first detected motion tempo value is supplied from the key information detection unit 53 to the content retrieval and selection unit 54.

The content retrieval and selection unit 54 retrieves and selects a first music piece Wa on the basis of the first detected motion tempo value and immediately plays back the first music piece Wa.

Specifically, in the above retrieval and selection, for example, a music piece having a minimum difference between the motion tempo and the music piece is retrieved. If multiple music pieces have the minimum difference, the music pieces are sequentially selected in descending order of the score. If multiple music pieces have the same score, one music piece is selected from the multiple music pieces at random or in ascending order of the identification numbers.

A tempo Two in Fig. 6 indicates the central value 130 spm of the walking tempo values. Since the first detected motion tempo value is close to 130 spm in the example shown in Fig. 6, a music piece having a music tempo of about 130 bpm is retrieved and selected as the first music piece Wa.

The content retrieval and selection unit 54 retrieves and selects the first music piece Wa and sets a threshold range corresponding to the motion tempo simultaneously with the start of the playback of the first music piece Wa. Since the motion tempo is close to 130 spm when the playback of the first music piece Wa is started in the example shown in Fig. 6, a threshold range THw (110 spm or faster and slower than 150 spm) corresponding to the walking tempo is set.

In the example shown in Fig. 6, the motion tempo of the user is within the threshold range THw in a time range from the time t1 to a time t11. At the time t11, the motion tempo of the user is outside the threshold range THw and enters a threshold range THs (slower than 110 spm) corresponding to the slow tempo. In a time range from the t11 to a time t21, the motion tempo of the user is within the threshold range THs. At the time t21, the motion tempo of the user is outside the threshold range THs and largely increase to enter a threshold range THj (150 spm or faster) corresponding to the jogging tempo.

After the content retrieval and selection unit 54 detects that the motion tempo of the user is outside the threshold range THw and enters the threshold range THs at the time t11, the content retrieval and selection unit 54 reads out the waiting time Tw-s set for the music piece Wa when the motion tempo is switched from the walking tempo to the slow tempo as the waiting time Tc and measures a time elapsed since the time t11.

After the content retrieval and selection unit 54 detects that the time Tw-s elapsed since the time t11 at a time t12, the content retrieval and selection unit 54 determines whether the motion tempo of the user is within the threshold range THw at the time t12, within which the motion tempo of the user was before the time t11. If the motion tempo of the user is within the threshold range THw (the motion tempo increases and returns to the walking tempo) unlike the example in Fig. 6, the content retrieval and selection unit 54 continues to play back the music piece Wa. If the motion tempo of the user is not within the threshold range THw as in the example shown in Fig. 6, the content retrieval and selection unit 54 retrieves and selects a music piece Sb having a music tempo matched with the motion tempo and plays back the music piece Sb instead of the music piece Wa that has been played back.

After the content retrieval and selection unit 54 detects that the motion tempo of the user is outside the threshold range THs and enters the threshold range THj at the time t21, the content retrieval and selection unit 54 reads out the waiting time Ts-j set for the music piece Sb when the motion tempo is switched from the slow tempo to the jogging tempo as the waiting time Tc and measures a time elapsed since the time t21.

After the content retrieval and selection unit 54 detects that the time Ts-j elapsed since the time t21 at a time t22, the content retrieval and selection unit 54 determines whether the motion tempo of the user is within the threshold range THs at the time t22, within which the motion tempo of the user was before the time t21. If the motion tempo of the user is within the threshold range THs (the motion tempo decreases and returns to the slow tempo) unlike the example in Fig. 6, the content retrieval and selection unit 54 continues to play back the music piece Sb. If the motion tempo of the user is not within the threshold range THs as in the example shown in Fig. 6, the content retrieval and selection unit 54 retrieves and selects a music piece Jc having a music tempo matched with the motion tempo and plays back the music piece Jc instead of the music piece Sb that has been played back.

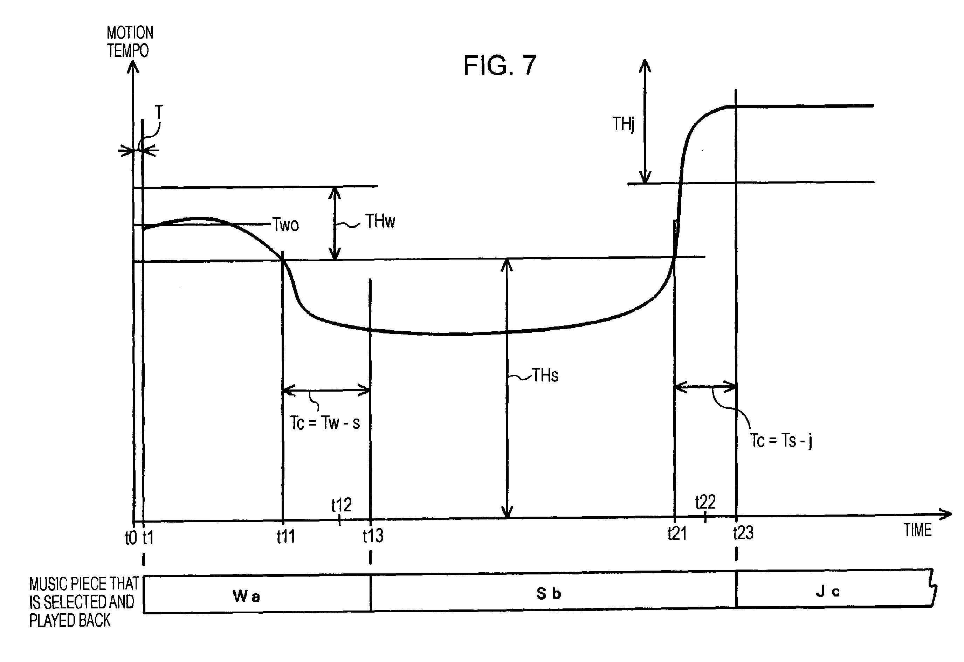

The waiting times Tw-s and Ts-j are relatively short in the example shown in Fig. 6. In contrast, when the waiting time Tw-s and Ts-j are longer than those in Fig. 6, respectively, as in an example shown in Fig. 7, at a time t13 after the time t12, the music piece to be selected and played back is switched from the music piece Wa to the music piece Sb and, at a time t23 after the time t22, the music piece to be selected and played back is switched from the music piece Sb to the music piece Jc.

### Second Example

When the user listens to music in daily life, it is often the case that the user alternately repeats the walking and the stopping in a short time. For example, the case occurs when the user gets on and off several escalators to move within a building. In such a case, the motion tempo has a value of zero on the escalator unless the user gets on and off the escalator and the motion tempo has a value other than zero while the user is walking on a landing or floor.

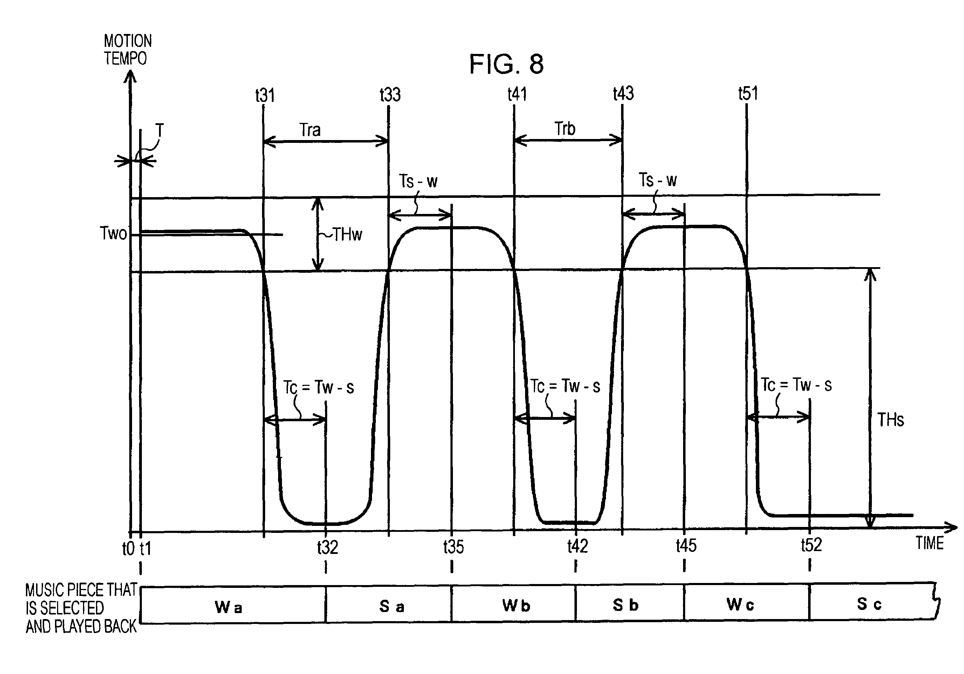

Fig. 8 shows a second example of a variation in the motion tempo of the user in the above case. In the second example, at a time t0, the user instructs the content playback apparatus 11 to select and play back a music piece and starts walking at the walking tempo, as in the examples shown in Figs. 6 and 7. At a time t1 after the time τ elapsed since the time t0, the first detected motion tempo value is supplied from the key information detection unit 53 to the content retrieval and selection unit 54. Subsequently, unlike the examples shown in Figs. 6 and 7, at a time t31 after the time t1, the motion tempo of the user is outside the threshold range THw corresponding to the walking tempo and enters the threshold range THs corresponding to the slow tempo. At a time t33 after the time t31, the motion tempo of the user is outside the threshold range THs and enters again the threshold range THw. At a time t41 after the time 33, the motion tempo of the user is outside the threshold range THw and enters again the threshold range THs. At a time t43 after the time t41, the motion tempo of the user is outside the threshold range THs and enters again the threshold range THw. At a time t51 after the time t43, the motion tempo of the user is outside the threshold range THw and enters again the threshold range THs.

In the above example, the content retrieval and selection unit 54 retrieves and selects the first music piece Wa at the time t1 and immediately plays back the music piece Wa. However, when the motion tempo of the user is outside the threshold range THw and enters the threshold range THs at the time t31, the content retrieval and selection unit 54 reads out the waiting time Tw-s set for the music piece Wa when the motion tempo is switched from the walking tempo to the slow tempo as the waiting time Tc and measures a time elapsed since the time t31.

After the content retrieval and selection unit 54 detects that the time Tw-s elapsed since the time t31 at a time t32, the content retrieval and selection unit 54 determines whether the motion tempo of the user is within the threshold range THw at the time t32, within which the motion tempo of the user was before the time t31.

In the example in Fig. 8, the waiting time Tw-s is set to a value shorter than a time Tra, which is the time between the time t31 and the time t33, the waiting time Tw-s elapsed before the time t33 when the motion tempo of the user is outside the threshold range THs and enters again the threshold range THw, and the motion tempo of the user is within the threshold range THs at the time t32.

Accordingly, at the time t32, the content retrieval and selection unit 54 retrieves and selects a music piece Sa having a music tempo matched with the motion tempo and plays back the music piece Sa instead of the music piece Wa that has been played aback.

In the above example, after the content retrieval and selection unit 54 detects that the motion tempo of the user is outside the threshold range THs and enters again the threshold range THw at the time t33 after the time t32, the content retrieval and selection unit 54 reads out the waiting time Ts-w set for the music piece Sa when the motion tempo is switched from the slow tempo to the walking tempo as the waiting time Tc and measures a time elapsed since the time t33.

After the content retrieval and selection unit 54 detects that the time Ts-w elapsed since the time t33 at a time t35, the content retrieval and selection unit 54 determines whether the motion tempo of the user is within the threshold range THs at the time t35, within which the motion tempo of the user was before the time t33.

In the example in Fig. 8, the waiting time Ts-w is set to a value shorter than the time between the time t33 and the time t41, the waiting time Ts-w elapsed before the time t41 when the motion tempo of the user is outside the threshold range THw and enters again the threshold range THs, and the motion tempo of the user is within the threshold range THw at the time t35.

Accordingly, at the time t35, the content retrieval and selection unit 54 retrieves and selects a music piece Wb having a music tempo matched with the motion tempo and plays back the music piece Wb instead of the music piece Sa that has been played aback.

Similarly, at a time t42, the content retrieval and selection unit 54 retrieves and selects a music piece Sb and plays back the music piece Sb instead of the music piece Wb. At a time 45, the content retrieval and selection unit 54 retrieves and selects a music piece Wc and plays back the music piece Wc instead of the music piece Sb. At a time t52, the content retrieval and selection unit 54 retrieves and selects a music piece Sc and plays back the music piece Sc instead of the music piece Wc. A time interval Trb denotes the time between the time t41 and the time t43.

As described above, if the waiting time Tw-s used when the motion tempo of the user is switched from the walking tempo to the slow tempo is short, the music piece to be selected and played back is switched each time the user stops or decreases the walking tempo on an escalator.

Consequently, it is desirable that the waiting time, such as the waiting time Tw-s or Tj-s, used when the motion tempo of the user is switched from the walking tempo or the jogging tempo to the slow tempo be set to a larger value, for example, 30 seconds.

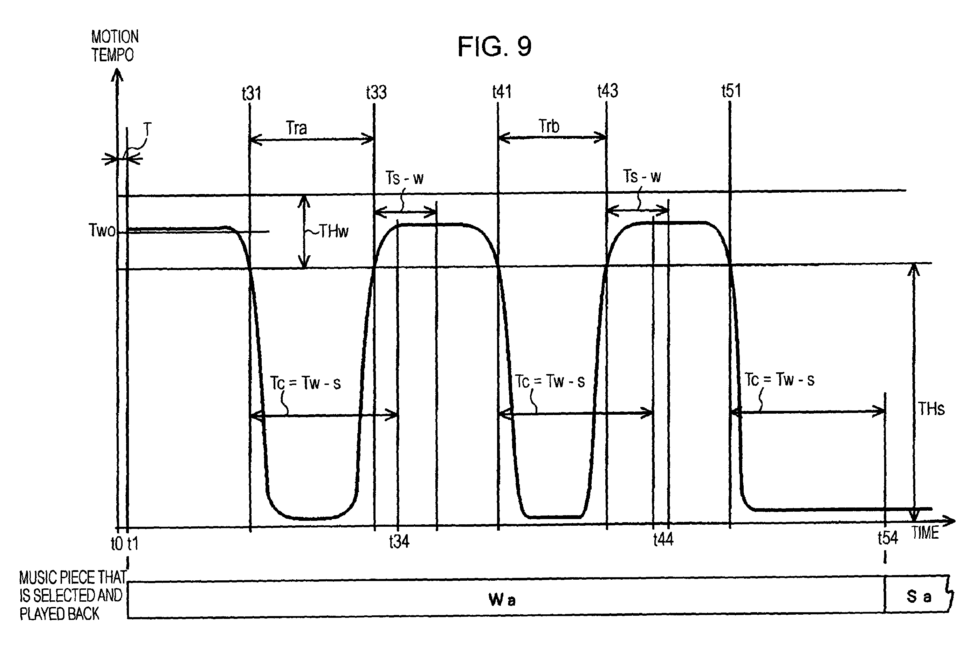

Fig. 9 shows an example of the motion tempo of the user, in which the waiting time Tw-s used when the motion tempo of the user is switched from the walking tempo to the slow tempo is set to a value larger than that in Fig. 8. The motion tempo is varied in the same manner as in Fig. 8.

Since Tw-s > Tra and Trb in the example in Fig. 9, the motion tempo of the user is within the threshold range THw at a time t34 after the time t33 and when the time Tw-s elapsed since the time t31, and, similarly, the motion tempo of the user is within the threshold range THw at a time t44 after the time t43 and when the time Tw-s elapsed since the time t41.

Consequently, at the times t34 and t44, the music piece is not retrieved and selected, that is, the music piece to be played back is not switched. At a time t54 when the time Tw-s elapsed since the time t51, a music piece Sa having a music tempo matched with the motion tempo is retrieved and selected and the music piece Sa is played back instead of the music piece Wa that has been played back because the motion tempo of the user is within the threshold range THs at the time t54.

It is preferable that the waiting time Tc, such as the time Tw-s, is dynamically calculated and updated on the basis of a history of the variations in the motion tempo of the user, as described below.

### Retrieval and Selection Process

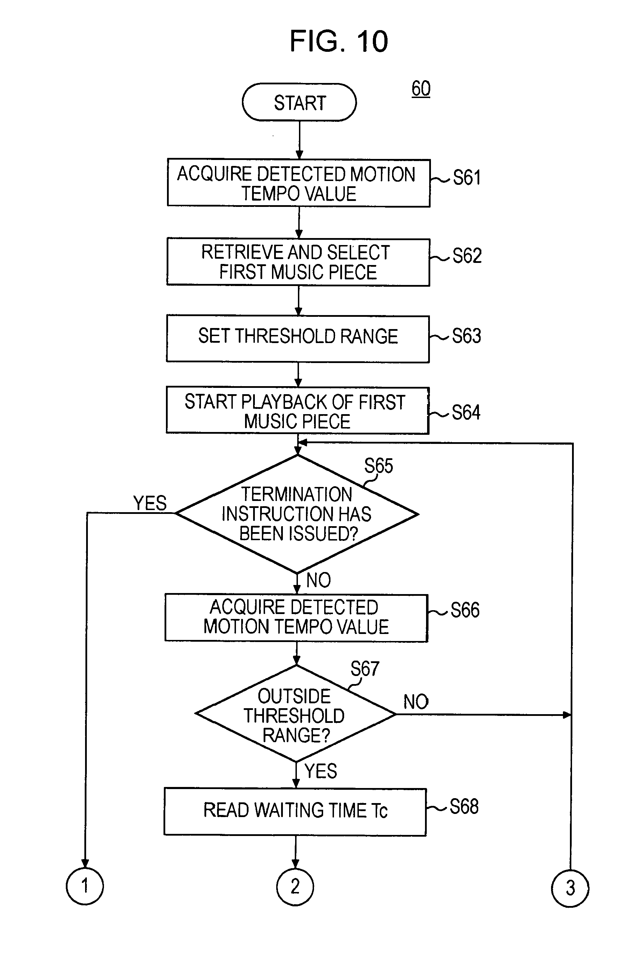

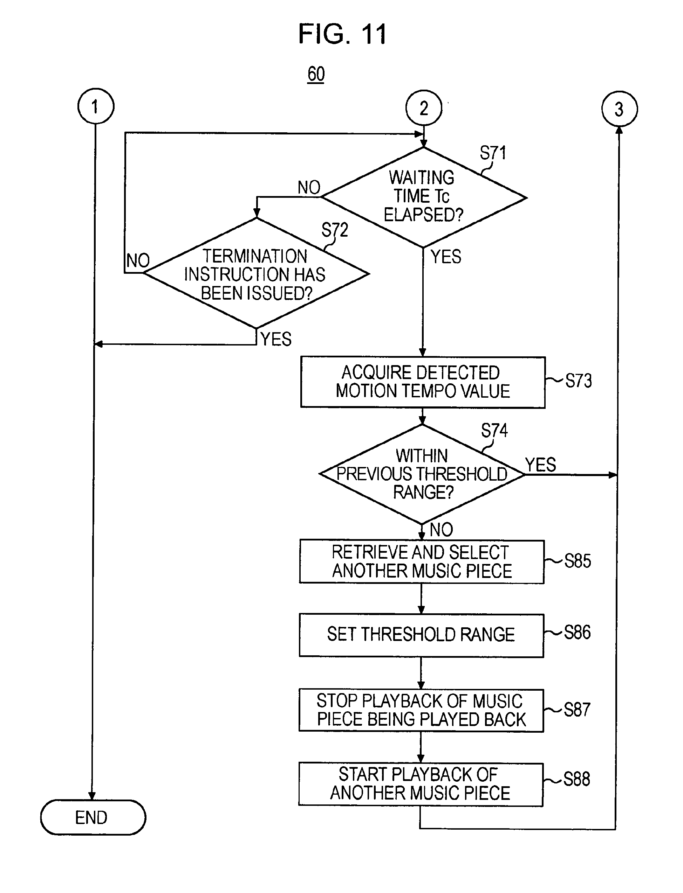

Figs. 10 and 11 are flowcharts showing an example of a retrieval and selection process 60 performed by the content retrieval and selection unit 54 in the content playback apparatus 11 when the waiting time Tc is not updated.

In the retrieval and selection process 60 shown in Figs. 10 and 11, after the content retrieval and selection unit 54 starts the process in response to a start instruction by the user, in Step S61, the content retrieval and selection unit 54 acquires a detected motion tempo value. In Step S62, the content retrieval and selection unit 54 retrieves and selects a first music piece. In Step S63, the content retrieval and selection unit 54 sets a threshold range. In Step S64, the content retrieval and selection unit 54 starts to play back the first music piece. In Step S65, the content retrieval and selection unit 54 determines whether a termination instruction has been issued by the user.

If the content retrieval and selection unit 54 determines that the termination instruction has been issued by the user, the content retrieval and selection unit 54 terminates the retrieval and selection process 60. If the content retrieval and selection unit 54 determines that the termination instruction has not been issued by the user, the content retrieval and selection unit 54 proceeds to Step S66 to acquire a detected motion tempo value. In Step S67, the content retrieval and selection unit 54 determines whether the motion tempo is outside the threshold range set in Step S63 (or Step S86 described below).

If the content retrieval and selection unit 54 determines that the motion tempo is not outside the threshold range (is within the threshold range), the content retrieval and selection unit 54 goes back to Step S65 to determine whether the termination instruction has been issued by the user. If the content retrieval and selection unit 54 determines that the termination instruction has not been issued by the user, the content retrieval and selection unit 54 proceeds to Step S66 to acquire a detected motion tempo value. In Step S67, the content retrieval and selection unit 54 determines whether the motion tempo is outside the threshold range. The content retrieval and selection unit 54 repeats the above steps.

If the content retrieval and selection unit 54 determines in Step S67 that the motion tempo is outside the threshold range, the content retrieval and selection unit 54 proceeds to Step S68 to start measurement of an elapsed time since the time when the motion tempo is outside the threshold range and to read out the waiting time corresponding to the variation mode as the waiting time Tc. In Step S71 in Fig. 11, the content retrieval and selection unit 54 determines whether the waiting time Tc elapsed since the time when the motion tempo is outside the threshold range.

If the content retrieval and selection unit 54 determines that the waiting time Tc did not elapse, the content retrieval and selection unit 54 proceeds to Step S72 to determine whether the termination instruction has been issued by the user. If the content retrieval and selection unit 54 determines that the termination instruction has not been issued by the user, the content retrieval and selection unit 54 goes back to Step S71 to repeat the determination of whether the waiting time Tc elapsed.

If the content retrieval and selection unit 54 determines that the waiting time Tc elapsed, then in Step S73, the content retrieval and selection unit 54 acquires a detected motion tempo value. In Step S74, the content retrieval and selection unit 54 determines whether the motion tempo is within the previous threshold range set in Step S63 (or Step S86 described below). If the content retrieval and selection unit 54 determines that the motion tempo is within the previous threshold range, the content retrieval and selection unit 54 does not retrieve and select a music piece and goes back to Step S65.

If the content retrieval and selection unit 54 determines that the motion tempo is not within the previous threshold range, then in Step S85, the content retrieval and selection unit 54 retrieves and selects another music piece. In Step S86, the content retrieval and selection unit 54 sets a threshold range. In Step S87, the content retrieval and selection unit 54 stops the playback of the music piece being played back. In Step S88, the content retrieval and selection unit 54 starts to play back the other music piece and goes back to Step S65.

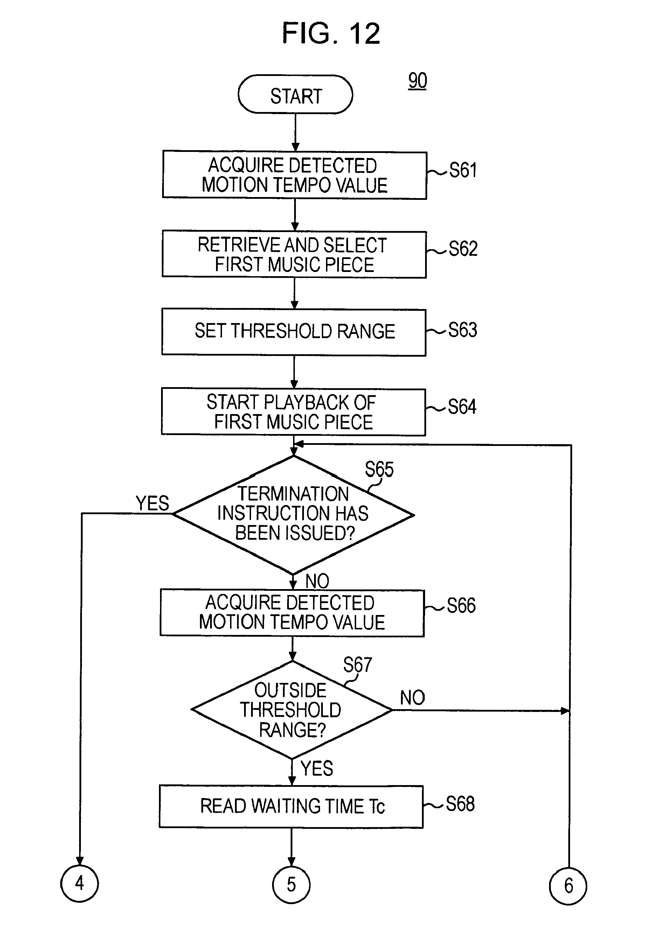

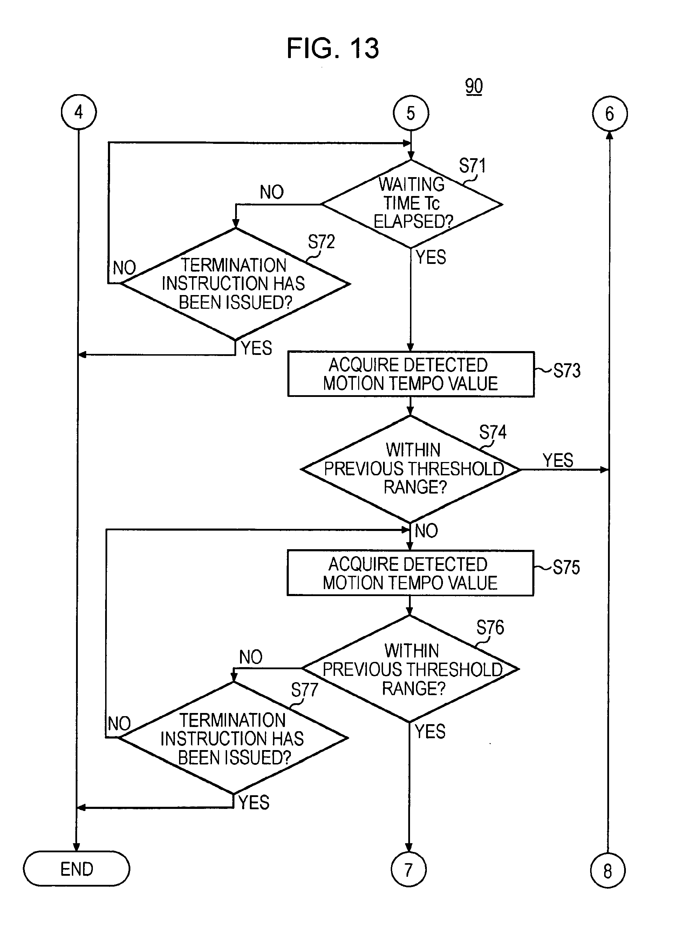

Figs. 12 to 14 are flowcharts showing an example of a retrieval and selection process 90 performed by the content retrieval and selection unit 54 in the content playback apparatus 11 when the waiting time Tc is updated on the basis of the history of the variations in the motion tempo.

In this example, among the six waiting times Tc described above with reference to Fig. 5, only the waiting time Tw-s used when the motion tempo is switched from the walking tempo to the slow temp and the waiting time Tj-s used when the motion tempo is switched from the jogging tempo to the slow tempo are to be updated.

In the retrieval and selection process 90, Steps S61 to S68 and Steps S71 to S74 are the same as in the retrieval and selection process 60 shown in Figs. 10 and 11.

In the retrieval and selection process 90, if the content retrieval and selection unit 54 determines in Step S74 that the motion tempo is within the previous threshold range, the content retrieval and selection unit 54 does not retrieve and select a music piece and goes back to Step S65. If the content retrieval and selection unit 54 determines in Step S74 that the motion tempo is not within the previous threshold range, then in Step S75, the content retrieval and selection unit 54 acquires a detected motion tempo value. In Step S76, the content retrieval and selection unit 54 determines whether the motion tempo is within the previous threshold range. If the content retrieval and selection unit 54 determines that the motion tempo is not within the previous threshold range, then in Step S77, the content retrieval and selection unit 54 determines whether the termination instruction has been issued by the user. If the content retrieval and selection unit 54 determines that the termination instruction has not been issued by the user, the content retrieval and selection unit 54 goes back to Step S75 to acquire a detected motion tempo value. In Step S76, the content retrieval and selection unit 54 determines whether the motion tempo is within the previous threshold range. The content retrieval and selection unit 54 repeats the above steps.

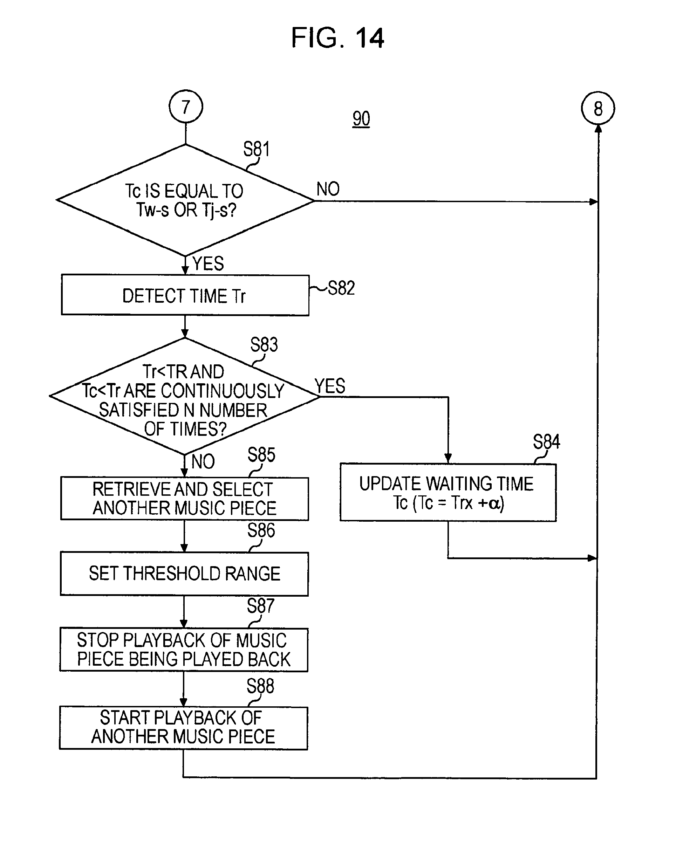

If the content retrieval and selection unit 54 determines in Step S76 that the motion tempo is within the previous threshold range (enters again the previous threshold range), then in Step S81 in Fig. 14, the content retrieval and selection unit 54 determines whether the waiting time Tc read out in Step S68 is the waiting time Tw-s or the waiting time Tj-s to be updated. If the content retrieval and selection unit 54 determines that the waiting time Tc read out in Step S68 is the waiting time Tw-s or Tj-s, as at the time t31 or t41 in Fig. 8, the content retrieval and selection unit 54 proceeds to Step S82. If the content retrieval and selection unit 54 determines that the waiting time Tc read out in Step S68 is not the waiting time Tw-s or Tj-s, as at the time t33 or t43 in Fig. 8, the content retrieval and selection unit 54 goes back to Step S65.

In Step S82, the content retrieval and selection unit 54 detects a time Tr, such as the time Tra or Trb in Fig. 8, when the waiting time Tc read out in Step S68 is the waiting time Tw-s or Tj-s, as at the time t31 or t41 in Fig. 8. In Step S83, the content retrieval and selection unit 54 determines whether the relationship "Tr < TR and Tc <Tr" is continuously established n number of times, for example, two times.

The "TR" denotes a time, for example, five seconds, set in advance. The "Tc" in this case denotes the waiting time Tw-s or Tj-s.

If the relationship "Tr < TR and Tc <Tr" is established only once, as at time t33 in Fig. 8, the content retrieval and selection unit 54 proceeds from Step S83 to Step S85 to retrieve and select another music piece. In Step S86, the content retrieval and selection unit 54 sets a threshold range. In Step S87, the content retrieval and selection unit 54 stops the playback of the music piece being played back. In Step S88, the content retrieval and selection unit 54 starts to play back the other music piece and goes back to Step S65.

If the relationship "Tr < TR and Tc <Tr" is continuously established two times, as at time t43 in Fig. 8, the content retrieval and selection unit 54 determines that the motion tempo of the user is frequently varied in a short time and proceeds from Step S83 to Step S84 without the retrieval and selection of a music piece. In Step S84, the content retrieval and selection unit 54 updates the waiting time Tc (the waiting time Tw-s or Tj-s) by setting the waiting time Tc to a value given by adding "α" to "Trx" (Tc = Trx + α) and goes back to Step S65.

The "Trx" denotes an average of n number of "Tr values (for example, two "Tr" values). The "α" denotes a time, for example, in a range from one to five seconds, set in advance. The waiting time Tc denotes the waiting time Tw-s in the example in Fig. 8.

Accordingly, if the motion tempo of the user is varied in the manner shown in Fig. 8, the music piece is switched as in the example in Fig. 8 at times t32, t35, and t42 because the original waiting time Tw-s is short. In contrast, the music piece is not switched since the time t43 even if the motion tempo of the user becomes the slow tempo for a short time because the waiting time Tw-s is updated into a longer time at the time t43.

The updated waiting time may be used only in the current retrieval and selection of a music piece. However, replacing the original waiting time with the updated waiting time allows the updated waiting time to be used as the original waiting time when a music piece is to be retrieved and selected after the content playback apparatus 11 is turned off.

### Another Method of Retrieving and Selecting Content

### Retrieval of Music Piece List

Although a music piece is directly retrieved and selected in the examples described above, a similar method can be used to retrieve a music piece list and select a music piece from the retrieved music piece list.

Methods of selecting a music piece from the retrieved music piece list include (2a) a method of selecting a music piece at random from the retrieved music piece list, (2b) a method of selecting a music piece in ascending order of the identification numbers from the retrieved music piece list, and (2c) a method of selecting a music piece in descending order of the scores from the retrieved music piece list and, if multiple music pieces have the same score in the music piece list, selecting a music piece from the multiple music pieces at random or in ascending of the identification numbers.

When a music piece list is retrieved and a music piece is selected from the retrieved music piece list, it is not necessary to calculate a difference between the motion tempo and the music tempo for each music piece recorded in the content database 51, unlike the direct retrieval and selection of a music piece, thus greatly reducing the load of the retrieval and selection process.

### Recording or Transmission of Result of Retrieval and Selection

Although the retrieved and selected music piece is played back in real time in the examples described above, ID information about each music piece that is retrieved and selected and timing information indicating the playback start time and the playback termination time of each music piece may be recorded in the internal storage unit 21 or the external storage unit 23 in preparation for playback of the music piece in another case.

In addition, the ID information about each music piece that is retrieved and selected and the timing information indicating the playback start time and the playback termination time of each music piece may be transmitted to an apparatus of another user over the Internet 100 or a communication network, such as a mobile phone network or a wireless communication network, in preparation for playback of the music piece in the apparatus of the other user.

### Recording of Detected Motion Tempo Value

The detection of the motion tempo of the user is performed simultaneously with the retrieval and selection of a music piece on the basis of the detected motion tempo value in the examples described above. However, as described below, registering a series of detected motion tempo values in the detection of the motion tempo of the user and invoking the registered detected motion tempo values after the motion tempo of the user has been detected and the detected motion tempo of the user has been registered in the series of detected motion tempo values allow a music piece suitable for the motion tempo of the user to be retrieved and selected without redetection of the motion tempo of the user.

For example, it is assumed that
(A) the user gets on and off trains and escalators to walk from his/her home to the place of work on weekday mornings,
(B) the user jogs in a park near the place of work in Monday, Wednesday, and Friday evenings, and
(C) the user walks around his/her home in Saturday and Sunday mornings.

In each of the cases (A), (B), and (C), the user specifies a motion mode for the content playback apparatus 11 and causes the content playback apparatus 11 to detect the motion tempo and to register the detected motion tempo value when the user is walking for the first time or subsequently.

The motion mode can be specified as "mode A" or "morning" in the case (A), can be specified as "mode B" or "evening" in the case (B), and can be specified as "mode C" or "holiday" in the case (C).

As a result, in the content playback apparatus 11, the key information detection unit 53 detects the motion tempo of the user and the CPU 16 associates the series of the detected motion tempo values with the specified modes to register the detected motion tempo values associated with the specified modes in the internal storage unit 21 or the external storage unit 23, as described above.

As described above, in each of the cases (A), (B), and (C), the user specifies the motion mode as the "mode A" or "morning" to instruct the content playback apparatus 11 to retrieve and select a music piece when the series of detected motion tempo values are registered in association with the motion modes and, for example, the user walks from his/her home to the place of work in a weekday morning.

Consequently, the CPU 16 in the content playback apparatus 11 invokes the series of detected motion tempo values registered for the specified motion mode, retrieves and selects a music piece in the above manner, and plays back the retrieved and selected music piece.

The content playback apparatus 11 may be configured such that the user only instructs the retrieval and selection of a music piece without the specification of the motion mode as the "mode A" or "morning" and such that the CPU 16 in the content playback apparatus 11 detects that it is a "weekday morning" by using a calendar clock circuit included in the content playback apparatus 11 and invokes the series of detected motion tempo values registered for the "weekday morning" motion mode.

The user changes the music pieces in the content database 51 as needed, for example, by deleting old music pieces and adding new music pieces. Accordingly, even if the detected motion tempo values that have been registered are invoked in the above manner on, for example, a weekday morning to retrieve and select a music piece, there are few cases in which the same music piece is selected and played back every morning and, thus, the user listens to different music pieces.

### Others

The music tempo is not necessarily indicated in advance as the music piece additional information. The music tempo may be detected each time a music piece is retrieved and selected.

The waiting time Tc is not necessarily set in advance. The waiting time Tc may be calculated in each case in consideration of how the motion tempo of the user is varied, the music tempo of the music piece, and the pitch or sense of beat of the music piece.

In addition, in the playback of the retrieved and selected music piece, the playback tempo of the music piece may be varied with a variation in the detected motion tempo value.

### Second Embodiment

A search system serving as a network system will now be described according to a second embodiment of the present invention.

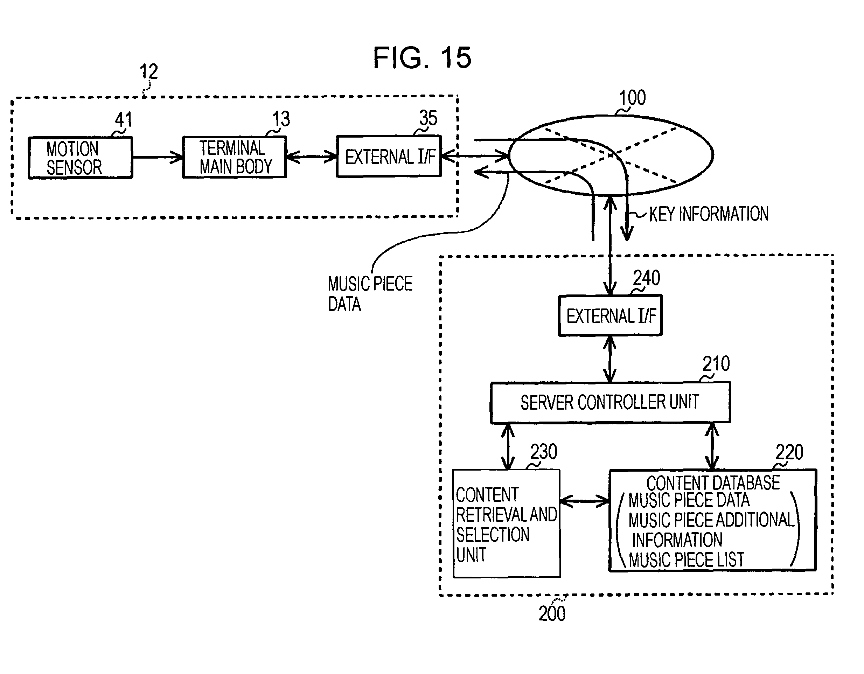

Fig. 15 is a block diagram showing an example the structure of the search system according to the second embodiment of the present invention. In the search system shown in Fig. 15, a user terminal 12 is connected to a search server 200 via the Internet 100.

The user terminal 12 is, for example, a music playback apparatus or a personal computer, which has a function of connecting to the Internet 100. Like the content playback apparatus 11 shown in Fig. 1, a motion sensor 41 and an external I/F 35 are connected to a terminal main body 13 in the user terminal 12.

However, since the search server 200 retrieves and selects a music piece and also transmits music piece data for streaming playback in the user terminal 12 to the user terminal 12, as described below, the terminal main body 13 in the user terminal 12 may not be provided with the content database 51 shown in Fig. 2.

The search server 200 retrieves and selects a music piece and transmits music piece data concerning the selected music piece to the user terminal 12. Accordingly, the search server 200 serves also as a delivery server. In the search server 200, a content database 220, a content retrieval and selection unit 230, and an external I/F 240 are connected to a server controller unit 210. The server controller unit 210 is connected to the Internet 100 via the external I/F 240. Music piece data concerning multiple music pieces, music piece additional information, and multiple music piece lists are recorded in the content database 220.

In the search system shown in Fig. 15, the user terminal 12 corresponds to the motion information detection unit 52 and the key information detection unit 53 shown in Fig. 2, and the content database 220 and the content retrieval and selection unit 230 in the search server 200 serve as the content database 51 and the content retrieval and selection unit 54 shown in Fig. 2, respectively.

As in the first embodiment of the present invention, the motion information detection unit 52 in the user terminal 12 detects a motion of the user as motion information, and the key information detection unit 53 in the user terminal 12 processes and analyzes the motion information to detect a motion tempo of the user.

The user terminal 12 transmits the detected motion tempo value to the search server 200 over the Internet 100 as key information.

The search server 200 receives the key information transmitted from the user terminal 12. The content retrieval and selection unit 230 in the search server 200 retrieves and selects a music piece in the same method as in the first embodiment. However, the level of popularity with the music piece of each user of the search system on the Internet 100 is used as the score.

The search server 200 transmits the music piece data concerning the retrieved and selected music piece to the user terminal 12. The user terminal 12 performs the streaming playback to the music piece on the basis of the transmitted music piece data.

The user terminal 12 may transmit the motion information to the search server 200 which detects the motion tempo from the motion information.

In addition, the following methods may be used. The user terminal 12 only downloads music piece data transmitted from the search server 200 in the retrieval and selection of a music piece and plays back the music piece later on the basis of the downloaded music piece data. Alternatively, the search server 200 records, for example, ID information concerning a retrieved and selected music piece in the search server 200 in a time series in the retrieval and selection, for example, "music piece A for four minutes and 20 seconds, music piece B for subsequent three minutes and five seconds, ..., music piece X for subsequent five minutes and 18 seconds", without transmitting the music piece data concerning the retrieved and selected music piece to the user terminal 12 or the search server 200 transmits the music piece data concerning the retrieved and selected music piece to the user terminal 12 where the music piece data is recorded. In this case, the user terminal 12 later receives the music piece data from the search server 200 to play back the retrieved and selected music piece in the time series in the retrieval and selection on the basis of the music piece data received from the search server 200, or the user terminal 12 later plays back the retrieved and selected music piece in the time series in the retrieval and selection on the basis of the music piece data recorded in the user terminal 12.

Also in the search system in the example shown in Fig. 15, a series of detected motion tempo values may be registered and invoked to retrieve and select a music piece. In this case, any of the following methods can be used.
(3a) The user terminal 12 performs detection of a motion tempo, registration of the detected motion tempo value, and invocation of the registered detected motion tempo value. The user terminal 12 transmits the detected motion tempo value to the search server 200 as the key information. The search server 200 retrieves and selects a music piece on the basis of the key information.
(3b) The user terminal 12 detects a motion tempo and transmits the detected motion tempo value to the search server 200 as the key information. The search server 200 registers the key information and invokes the registered key information in response to an execution instruction from the user terminal 12 to retrieve and select a music piece.
(3c) The user terminal 12 transmits motion information to the search server 200. The search server 200 detects a motion tempo from the motion information to register the detected motion tempo value as the key information and invokes the registered key information in response to an execution instruction from the user terminal 12 to retrieve and select a music piece.

Although the user terminal 12 is connected to the search server 200 over the Internet 100 in the above examples, the method according to an embodiment of the present invention is applicable to a search system in which a mobile phone terminal of the user is connected to a search server over a mobile phone network including base stations.

### Other Embodiments

Although the content is a music piece in the above embodiments of the present invention, embodiments of the present invention is applicable to cases in which the content is not a music piece.

For example, in an animation image, the entire image is varied at a certain tempo and characters in the image move at certain tempos. Different pieces of content have different tempos. For example, a piece of content has a faster tempo and another piece of content has a slower tempo.

Accordingly, information indicating the tempo of each content may be associated with the content as content additional information. In retrieval of a content list, pieces of content having tempos within a tempo range corresponding to the content list are listed in the content list and a piece of content is retrieved and selected in a manner similar to that in the case where the content is a music piece.

It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A method of retrieving and selecting content comprising the steps of:
detecting a motion tempo of a user;
determining whether a time during which the detected motion tempo is continuously outside a threshold range of the motion tempo corresponding to content being played back exceeds a waiting time that is set or calculated; and
retrieving and selecting content suitable for the motion tempo of the user if the motion tempo of the user is outside the threshold range for a time period longer than the waiting time.

2. The method of retrieving and selecting content according to Claim 1,
wherein the retrieved and selected content is played back in real time.

3. The method of retrieving and selecting content according to Claim 1,
wherein identification information used for identifying the retrieved and selected content and timing information indicating a playback start time of the content and a playback termination time thereof are recorded in preparation for playback of the content in another case.

4. The method of retrieving and selecting content according to Claim 1,
wherein a series of motion tempos registered in a storage device in a time series are invoked from the storage device as the motion tempo and the invoked series of motion tempos are used for the retrieval and selection of content.

5. The method of retrieving and selecting content according to Claim 1,
wherein the waiting time is set by the user.

6. The method of retrieving and selecting content according to Claim 1,
wherein the waiting time is set or calculated for every content or for every content list.

7. The method of retrieving and selecting content according to Claim 1,
wherein a waiting time used when the motion tempo is increased and is outside the threshold range and a waiting time used when the motion tempo is decreased and is outside the threshold range are separately set or calculated.

8. The method of retrieving and selecting content according to Claim 1,
wherein the waiting time is dynamically calculated from a history of variations in the motion tempo.

9. A content playback apparatus comprising:
a storage device in which content data is recorded;
detecting means for detecting a motion tempo of a user and outputting the detected motion tempo value;
retrieving and selecting means for retrieving and selecting content suitable for the detected motion tempo value output from the detecting means; and
playback means for playing back the content data recorded in the storage device or content data transmitted from a delivery server connected to the content playback apparatus over a communication network as the content retrieved and selected by the retrieving and selecting means,
wherein the retrieving and selecting means determines whether a time during which the detected motion tempo value is continuously outside a threshold range of the motion tempo corresponding to content being played back exceeds a waiting time that is set or calculated and, if the detected motion tempo value is outside the threshold range for a time period longer than the waiting time, retrieves and selects content suitable for the detected motion tempo value.

10. The content playback apparatus according to Claim 9,
wherein the waiting time is set by the user.

11. The content playback apparatus according to Claim 9,
wherein the waiting time is set or calculated for every content or for every content list.

12. The content playback apparatus according to Claim 9,
wherein a waiting time used when the motion tempo is increased and is outside the threshold range and a waiting time used when the motion tempo is decreased and is outside the threshold range are separately set or calculated.

13. The content playback apparatus according to Claim 9,
wherein the waiting time is dynamically calculated from a history of variations in the motion tempo.

14. A search server to which a user terminal is connected over a communication network, the search server comprising:
a database storing content data or content additional information concerning multiple pieces of content; and
retrieving and selecting means for retrieving and selecting content suitable for a detected motion tempo value of a user from the multiple pieces of content stored in the database as the content data or the content additional information,
wherein the retrieving and selecting means determines whether a time during which the detected motion tempo value is continuously outside a threshold range of the motion tempo corresponding to the selected content exceeds a waiting time that is set or calculated and, if the detected motion tempo value is outside the threshold range for a time period longer than the waiting time, retrieves and selects content suitable for the detected motion tempo value.

15. The search server according to Claim 14,
wherein the waiting time is set by the user.

16. The search server according to Claim 14,
wherein the waiting time is set or calculated for every content or for every content list.

17. The search server according to Claim 14,
wherein a waiting time used when the motion tempo is increased and is outside the threshold range and a waiting time used when the motion tempo is decreased and is outside the threshold range are separately set or calculated.

18. The search server according to Claim 14,
wherein the waiting time is dynamically calculated from a history of variations in the motion tempo.

19. A recording medium in which a program for retrieving and selecting content is recorded, the program causing a computer to function as means for determining whether a time during which a detected motion tempo value of a user is continuously outside a threshold range of the motion tempo corresponding to the selected content exceeds a waiting time that is set or calculated and, if the detected motion tempo value is outside the threshold range for a time period longer than the waiting time, retrieving and selecting content suitable for the detected motion tempo value, in order to retrieve and select a piece of content from multiple pieces of content.

20. A content playback apparatus comprising:
a storage device in which content data is recorded;
a detecting unit detecting a motion tempo of a user and outputting the detected motion tempo value;
a retrieving and selecting unit retrieving and selecting content suitable for the detected motion tempo value output from the detecting unit; and
a playback unit playing back the content data recorded in the storage device or content data transmitted from a delivery server connected to the content playback apparatus over a communication network as the content retrieved and selected by the retrieving and selecting unit,
wherein the retrieving and selecting unit determines whether a time during which the detected motion tempo value is continuously outside a threshold range of the motion tempo corresponding to content being played back exceeds a waiting time that is set or calculated and, if the detected motion tempo value is outside the threshold range for a time period longer than the waiting time, retrieves and selects content suitable for the detected motion tempo value.

21. A search server to which a user terminal is connected over a communication network, the search server comprising:
a database storing content data or content additional information concerning multiple pieces of content; and
a retrieving and selecting unit retrieving and selecting content suitable for a detected motion tempo value of a user from the multiple pieces of content stored in the database as the content data or the content additional information,
wherein the retrieving and selecting unit determines whether a time during which the detected motion tempo value is continuously outside a threshold range of the motion tempo corresponding to the selected content exceeds a waiting time that is set or calculated and, if the detected motion tempo value is outside the threshold range for a time period longer than the waiting time, retrieves and selects content suitable for the detected motion tempo value.
